# FASCICULE DE BREVET EUROPEEN

(11) **EP 3 339 786 B1**
(45) Date de publication et mention de la délivrance du brevet: **03.04.2024**
(21) Numéro de dépôt: 17210383.0
(22) Date de dépôt: 22.12.2017
(51) Int. Cl.: F26B 3/06, F26B 17/04, F26B 23/00

(54) **DISPOSITIF DE SÉCHAGE THERMIQUE D'UN PRODUIT PAR CONVECTION ET POMPE À CHALEUR ET UN PROCÉDÉ ASSOCIÉ**
WÄRMETROCKNUNGSVORRICHTUNG FÜR EIN PRODUKT DURCH KONVEKTION, UND WÄRMEPUMPE UND ENTSPRECHENDES VERFAHREN
DEVICE FOR THERMAL DRYING OF A PRODUCT BY CONVECTION AND HEAT PUMP AND ASSOCIATED METHOD

(30) Priorité: 22.12.2016 FR 1663239
(43) Date de publication de la demande: 27.06.2018
(73) Titulaire: Commissariat à l'Energie Atomique et aux Energies Alternatives, 75015 Paris (FR)
(72) Inventeur: BOILLOT, Benjamin, 38330 Saint-Ismier (FR)
(74) Mandataire: Hautier IP

(56) Documents cités:
- EP-A1- 0 079 523
- CN-A- 101 782 315
- CN-A- 105 423 705
- DE-A1- 3 013 820
- GB-A- 2 263 968

## Description

### DOMAINE TECHNIQUE DE L'INVENTION

L'invention concerne un dispositif de séchage thermique d'un produit par convection avec pompe à chaleur et un procédé associé.

L'invention concerne le domaine du séchage thermique. Elle trouve pour application particulièrement avantageuse le séchage industriel de produit humide par convection d'un gaz de séchage, par exemple le séchage de biomasse ou de boues.

### ÉTAT DE LA TECHNIQUE

Le séchage est une opération unitaire ayant pour but d'éliminer, par évaporation, un liquide imprégnant un solide. Ce procédé s'effectue dans la majorité des cas par voie thermique.

Cette opération nécessite un apport thermique important pour amener l'eau à se retirer du produit et pour assurer le transfert de masse de la vapeur. Généralement, le solvant évaporé est de l'eau. Ce changement de phase liquide-gaz, complété par la faible efficacité de ce type de procédé, rend l'opération très coûteuse en énergie (jusqu'à plus de 1 000 kWh par tonne d'eau évaporée).

La maîtrise de l'énergie passe également par la substitution d'une forme d'énergie à une autre, ou l'utilisation simultanée ou alternée de plusieurs modes de transfert de l'énergie.

L'apport de chaleur à pression atmosphérique peut se faire de différentes manières. Le mode de transfert le plus utilisé étant la convection, car il permet un transfert simultané de chaleur et de masse (vapeur issue du produit). Le fluide sécheur utilisé habituellement est l'air chaud.

On connait notamment des séchoirs de type continu dans lequel le produit à sécher est en mouvement dans une cavité entre une entrée et une sortie. Dans ces séchoirs, de l'air est chauffé par un système de chauffage tel que par exemple des bruleurs à gaz ou des bruleurs de biomasse ou bien encore par des résistances électriques. L'air chauffé est injecté dans la cavité et traverse le produit à sécher humide. L'air chauffé provoque l'évaporation de l'eau à la surface du produit et évacue la vapeur, ainsi l'air se charge en humidité et est extrait par un autre orifice.

DE3013820 A1 divulgue un dispositif pour le séchage d'un produit à sécher selon l'art antérieur et un procédé de séchage d'un produit à sécher selon l'art antérieur.

Afin de diminuer la consommation énergétique, il est connu de réchauffer l'air entrant au moyen de calories récupérées sur l'air sortant, notamment par une pompe à chaleur.

Toutefois, les pompes à chaleur actuelles ne sont pas configurées pour chauffer un gaz à des températures élevées comme cela est nécessaire dans les séchoirs industriels, notamment pour des températures de l'ordre de 120°C. Classiquement, les pompes à chaleur permettent une température maximale de 55°C. Les pompes à chaleur ne sont donc utilisées que pour préchauffer l'air entrant et il est quand même nécessaire d'avoir un chauffage d'appoint. Pour obtenir un séchage équivalent avec une température de l'air de 55°C seulement, il faudrait fortement augmenter le débit d'air et donc augmenter la taille de l'installation.

Ainsi, l'usage d'une pompe à chaleur apporte un surcoût pour l'ajout d'une pompe à chaleur, mais aussi pour l'augmentation de la ventilation et donc de la taille de l'installation.

Il existe donc le besoin de proposer un sécheur qui permet à la fois de faire des économies d'énergies et de coût.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ DE L'INVENTION

Pour atteindre cet objectif, un aspect de la présente invention concerne un dispositif pour le séchage d'un produit à sécher selon la revendication 1.

De cette manière, le dispositif de séchage permet une recirculation de l'air de séchage dans au moins une autre zone de sorte à augmenter la saturation en eau dudit gaz avant son extraction. De plus, la pompe à chaleur permet de récupérer de l'énergie thermique du gaz de séchage en sortie d'une zone pour augmenter la température du gaz de séchage en entrée de zone. La pompe à chaleur permet également entre les zones d'assécher l'air. On récupère de l'eau au niveau de l'évaporateur en condensant la vapeur d'eau présente dans l'air de séchage. Ainsi, le séchage dans la zone suivante est plus efficace.

La combinaison de la recirculation et de la récupération d'énergie thermique permet un séchage satisfaisant sans augmentation ou avec une faible augmentation de débit et avec au final un gain énergétique notable pour une température de gaz de séchage nettement plus faible que dans les dispositifs de l'état de la technique nécessitant un chauffage à 120°C.

Par ailleurs, le rendement de la pompe à chaleur est amélioré en réduisant la température entre les sources. Par exemple, pour une température de séchage de 40°C, le COP de la pompe à chaleur (Coefficient de Performance) est de 4.7 alors que pour 55°C le COP est de 3.5.

De préférence, le gaz de séchage est chauffé entièrement par la pompe à chaleur. Préférentiellement, le dispositif ne comprend pas de dispositif de chauffage complémentaire du gaz de séchage

Avantageusement, au moins un évaporateur récupère, directement ou indirectement, de la chaleur à chaque zone.

Un autre aspect de la présente invention concerne un procédé de séchage d'un produit à sécher selon la revendication 7.

### BRÈVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
La FIGURE 1 est un schéma d'un dispositif de séchage selon un premier mode de réalisation de l'invention
La FIGURE 2 est un schéma d'un dispositif de séchage qui ne fait pas partie de l'invention.
La FIGURE 3 est un schéma d'un dispositif de séchage selon une variante du mode de réalisation de la FIGURE 2.
La FIGURE 4 est un schéma d'un dispositif de séchage selon une variante du mode de réalisation de la FIGURE 3.
La FIGURE 5 est un schéma d'un dispositif de séchage qui ne fait pas partie de l'invention.
La FIGURE 6 est le schéma d'une variante du dispositif selon la FIGURE 4 avec des points de mesure de températures et d'humidité du gaz de séchage.
La FIGURE 7 est un diagramme de l'air humide « CARRIER » sur lequel sont représentées les températures et les humidités du gaz de séchage aux différents points à 1 à 10 indiqués à la FIGURE 6.
La FIGURE 8 est un graphe sur lequel sont reportés les gains en énergie primaire et les gains sur le coût de la consommation énergétique pour différentes configurations de dispositif suivant le Tableau 1.
La FIGURE 9 est un graphe sur lequel sont reportés les gains en énergie primaire et les gains sur le coût de la consommation énergétique pour différentes configurations de dispositif avec ou sans le premier évaporateur suivant le Tableau 2.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques

### DESCRIPTION DÉTAILLÉE DE L'INVENTION

Il est tout d'abord rappeler que l'invention concerne un dispositif selon la revendication 1.
Dans un mode de réalisation non couvert par l'invention, le chauffage du gaz de séchage en entrée de chaque zone est direct ou indirect pour chaque zone si le nombre de condenseur est au moins égal au nombre de zones. Selon l'invention, le chauffage du gaz de séchage en entrée de chaque zone est indirect pour au moins une zone, si le nombre de condenseur est inférieur au nombre de zones. De préférence, le dispositif est configuré pour que la chaleur du gaz de séchage en sortie d'au moins une zone soit récupérée par au moins un évaporateur, la récupération de la chaleur du gaz de séchage en sortie d'au moins une zone étant direct, selon un mode de réalisation non couvert par l'invention, ou indirect, selon un mode de réalisation couvert par l'invention, pour au moins une zone.

Avant d'entamer une revue détaillée de modes de réalisation de l'invention, sont énoncées ci-après des caractéristiques optionnelles qui peuvent éventuellement être utilisées en association ou alternativement :
- selon un mode de réalisation non couvert par l'invention, le dispositif étant configuré pour que la chaleur du gaz de séchage en sortie d'au moins une zone soit récupérée par au moins un évaporateur, la récupération la chaleur du gaz de séchage en sortie d'au moins une zone étant direct ou indirect pour chaque zone si le nombre d'évaporateur est au moins égal au nombre de zones et selon un mode de réalisation couvert par l'invention, la récupération de la chaleur du gaz de séchage en sortie d'au moins une zone étant indirect pour au moins une zone si le nombre d'évaporateur est inférieur au nombre de zones.
- au moins un évaporateur de la pompe à chaleur est configuré pour récupérer, directement, selon un mode de réalisation non couvert par l'invention, ou indirectement, de la chaleur du gaz de séchage en sortie de chaque zone,
- la au moins une pompe à chaleur comprend un seul condenseur configuré pour chauffer indirectement le gaz de séchage en entrée de chaque zone et un seul évaporateur pour récupérer indirectement, de la chaleur du gaz de séchage en sortie d'au moins une zone,
- le dispositif comprenant un circuit de chauffage intermédiaire configuré pour transférer la chaleur d'un condenseur au gaz de séchage en entrée d'au moins une zone
- le dispositif comprenant un circuit de chauffage intermédiaire configuré pour transférer la chaleur du condenseur au gaz de séchage en entrée de chaque zone
- le dispositif comprenant un circuit de récupération intermédiaire configuré pour transférer la chaleur du gaz de séchage en sortie d'au moins une zone à l'évaporateur,
- le dispositif comprenant un circuit de récupération intermédiaire est configuré pour transférer la chaleur du gaz de séchage en sortie de chaque zone à l'évaporateur, le dispositif comprenant un circuit de récupération intermédiaire configuré pour transférer la chaleur du gaz de séchage en sortie de chaque zone sauf une à l'évaporateur, de préférence pour chaque zone,
- le circuit de chauffage intermédiaire comprend au moins un premier échangeur intermédiaire,
- le circuit de récupération intermédiaire comprend au moins un deuxième échangeur intermédiaire,
- selon un mode de réalisation non couvert par l'invention, le dispositif comprenant un condenseur pour chaque zone et un évaporateur pour chaque zone sauf une zone,
- selon un mode de réalisation non couvert par l'invention, le dispositif comprenant un condenseur pour chaque zone et un évaporateur pour chaque zone,
- le nombre de zones de séchage est compris entre 2 et 10, préférentiellement entre 2 et 5,
- le dispositif comprend une première zone et une deuxième zone adjacentes, positionnées suivant le sens de déplacement du produit entre l'entrée et la sortie du produit,
- selon un mode de réalisation non couvert par l'invention, la première zone ne comprend pas d'évaporateur,
- selon un mode de réalisation non couvert par l'invention, la première zone ne comprend pas de circuit de récupération intermédiaire,
- le gaz de séchage est de l'air,
- le dispositif ne comprend pas de dispositif de chauffage d'appoint du gaz de séchage,
- le circuit de circulation de gaz de séchage est configuré pour que le gaz de séchage circule dans chaque zone de séchage suivant une direction principale perpendiculaire à une direction principale de déplacement du produit,
- l'organe de déplacement du produit est configuré pour que le produit traverse l'enceinte longitudinalement suivant une direction principale horizontale.

L'invention concerne également un procédé de séchage d'un produit à sécher selon la revendication 7.

Selon un mode de réalisation non couvert par l'invention, le chauffage est direct ou indirect pour chaque zone si le nombre de condenseurs est au moins égal au nombre de zones. Le chauffage est indirect pour au moins une zone si le nombre de condenseurs est inférieur au nombre de zones.

Sont énoncées ci-après des caractéristiques optionnelles qui peuvent éventuellement être utilisées en association ou alternativement
- il n'y a pas d'étape de chauffage du gaz de séchage par un dispositif d'appoint,
- le procédé comprend dans chaque zone une circulation croisé du produit et du gaz de séchage.

Selon un mode de réalisation non couvert par l'invention, si le nombre de condenseur est au moins égal au nombre de zone : le chauffage du gaz de séchage en entrée de chaque zone peut être direct ou indirect pour chaque zone. C'est-à-dire que :
- Soit : pour certaines seulement des zones, le chauffage est direct, un condenseur chauffe alors directement le gaz en entrée de ces certaines zones. Pour les autres zones le chauffage est indirect, un condenseur chauffe alors indirectement le gaz en entrée de ces autres zones, avantageusement par un système de chauffage intermédiaire préférentiellement pour chacune de ces autres zones un condenseur est relié à un système intermédiaire de chauffage ;
- Soit : le chauffage est direct, un condenseur chauffe alors directement le gaz en entrée de chaque zone. Ainsi le gaz en entrée de toutes les zones est chauffé directement par un condenseur. Il n'y a pas de système intermédiaire de chauffage avec par exemple un échangeur intermédiaire.
- Soit : le chauffage est indirect, un condenseur chauffe alors de manière indirecte le gaz en entrée chaque zone, avantageusement par un système de chauffage intermédiaire. Ainsi le gaz en entrée de toutes les zones est chauffé indirectement par un condenseur. Préférentiellement pour chaque zone un condenseur est relié à plusieurs systèmes de chauffage intermédiaire chacun associé à une zone.

Selon l'invention, le nombre de condenseur étant inférieur au nombre de zone, le chauffage du gaz de séchage en entrée de chaque zone est indirect pour au moins une zone. C'est-à-dire que :
- Le chauffage est indirect pour chaque zone. Dans ce cas un condenseur chauffe indirectement le gaz en entrée de chaque zone, avantageusement par un système de chauffage intermédiaire. Préférentiellement pour chaque zone un condenseur est relié à plusieurs systèmes de chauffage intermédiaire chacun associé à une zone ;
- Selon un mode de réalisation non couvert par l'invention, pour certaines zones seulement le chauffage est indirect. Dans ce cas un condenseur chauffe indirectement le gaz en entrée de ces zones, avantageusement par un système de chauffage intermédiaire. Pour d'autres zones le chauffage peut être direct. Préférentiellement pour certaines zones un condenseur est relié à plusieurs systèmes de chauffage intermédiaire chacun associé à une zone et pour d'autres zones le chauffage est direct, un condenseur chauffe directement le gaz en entrée de ces autres zones.

Selon l'invention, si le nombre d'évaporateur est au moins égal au nombre de zone : la récupération de la chaleur du gaz de séchage en sortie de chaque zone peut être directe ou indirecte pour chaque zone. C'est-à-dire que :
- Soit pour certaines zones seulement, la récupération est directe (un évaporateur récupère directement la chaleur du gaz en sortie de ces certaines zones) et pour d'autres zones la récupération est indirect ( un évaporateur récupérer la chaleur indirectement le gaz en sortie de ces autres zones), avantageusement par un système de récupération intermédiaire. Préférentiellement pour chacune de ces autres zones un évaporateur est relié à un système intermédiaire de la récupération;
- Soit, suivant un mode de réalisation non couvert par l'invention, la récupération est directe pour toutes les zones. Dans ce cas, un évaporateur récupère directement la chaleur du gaz en sortie de chaque zone ;
- Soit la récupération est indirecte pour toutes les zones. Dans ce cas, un évaporateur récupère indirectement la chaleur du gaz en sortie de chaque zone, avantageusement par un système de récupération intermédiaire, préférentiellement pour chaque zone un évaporateur est relié à plusieurs systèmes de récupération intermédiaire chacun associé à une zone.

Le dispositif de séchage de l'invention permet le séchage de produit pâteux, pulvérulent, granulaire, fibreux, plan, en forme ou en morceaux.

Le dispositif selon l'invention comprend une enceinte qui est avantageusement fixe, et dans laquelle le produit 105 est introduit puis évacué.

L'enceinte comprend une entrée 101 du produit 105 et une sortie 102 du produit 105. A titre d'exemple préféré, l'entrée 101 et la sortie 102 sont opposées, c'est-à-dire qu'elles sont positionnées sur des parois opposées de l'enceinte. L'entrée 101 et la sortie 102 forment avantageusement chacune une extrémité de l'enceinte.

Préférentiellement, le produit 105 est en mouvement au sein de l'enceinte. Toutefois, il peut être prévu que le produit est introduit dans l'enceinte puis extrait une fois le séchage terminé et sans déplacement pendant le séchage.

Avantageusement, le dispositif comprend un organe ou dispositif de déplacement, ou aussi dénommé élément de translation, du produit 105.

L'organe de déplacement s'étendant préférentiellement longitudinalement, entre l'entrée 101 et la sortie 102.

La translation peut être réalisée par une bande, une ceinture, ou vis sans fin ou par gravité. Par exemple, un convoyeur, un tapis par exemple en tôles pleines ou perforées, en grillage ou en toile tissée. L'élément de translation entraine le produit 105 entre l'entrée 101 de produit et la sortie 102 de produit. La translation peut être linéaire ou non. La translation se fait suivant une direction principale longitudinale s'étendant préférentiellement horizontalement, mais pouvant être inclinée par rapport à l'horizontale voire même verticale dans le cas d'un déplacement par gravité pour lequel le produit chute dans une enceinte.

Ce type de dispositif est par exemple connu sous le nom de sécheur à tunnel. Des variantes de ce type de sécheur existent également tel qu'un sécheur tapis à tabliers en série, un sécheur tapis à tabliers superposés, un sécheur chariot ou un sécheur à balancelles.

Le produit 105 à sécher est déposé à l'entrée 101 de l'enceinte, aussi appelée tunnel, par un moyen adéquat, qui peut être une bande oscillante, une vis d'étalement, un distributeur vibrant ou une boudineuse.

Le produit 105 introduit au niveau de l'entrée 101 présente un pourcentage d'humidité supérieur à celui du produit 105 évacué au niveau de la sortie 102. Le produit 105 est dit « à sécher » en entrée 101 et « séché » en sortie 102. A titre d'exemple pour des plaquettes de bois, en entrée 101, le produit 105 présente une température de 20°C et 40% d'humidité relative et en sortie 102, le produit 105 présente une température de 35°C et 15% d'humidité relative. L'humidité relative du produit à sécher est supérieure à l'humidité relative du produit séché.

Le dispositif de séchage comprend un apport de chaleur au produit 105 qui se fait selon l'invention par l'intermédiaire d'un gaz de séchage notamment de l'air chaud 130.

Le dispositif comprend un circuit de circulation de gaz de séchage. Le gaz de séchage est injecté dans l'enceinte par une entrée principale 103. Le gaz de séchage est extrait de l'enceinte par une extraction principale 104.

Préférentiellement, l'entrée principale 103 et l'extraction principale 104 sont distinctes de l'entrée 101 de produit et la sortie 102 de produit. Le gaz de séchage entrant est dénommé gaz de séchage chaud du fait de la température plus élevée du gaz de séchage en entrée qu'à l'extraction et le gaz de séchage sortant est dénommé gaz de séchage humide du fait de la saturation plus élevée du gaz de séchage à l'extraction qu'en entrée.

Le gaz de séchage est mis en contact avec le produit à sécher dans l'enceinte et se charge ainsi en humidité.

Le circuit de circulation du gaz de séchage comprend avantageusement au moins un ventilateur pour mettre en circulation le gaz dans le circuit

Le circuit de circulation du gaz de séchage comprend plusieurs cycles de circulation du gaz de séchage, aussi dénommé ci-après cycle de séchage.

La circulation de l'air 130 dans l'enceinte se fait à co-courant ou à contre-courant. C'est-à-dire que la direction principale de déplacement du gaz de séchage est parallèle à la direction principale de déplacement du produit à sécher et que le sens de déplacement est identique ou contraire au sens de déplacement du produit.

Avantageusement, le gaz de séchage est mis en circulation dans l'enceinte de sorte à avoir un déplacement préférentiellement croisé, au moins localement, avec le produit à sécher. C'est-à-dire que le gaz de séchage traverse le produit à sécher. La direction principale de déplacement du gaz de séchage est perpendiculaire à la direction principale de déplacement du produit à sécher.

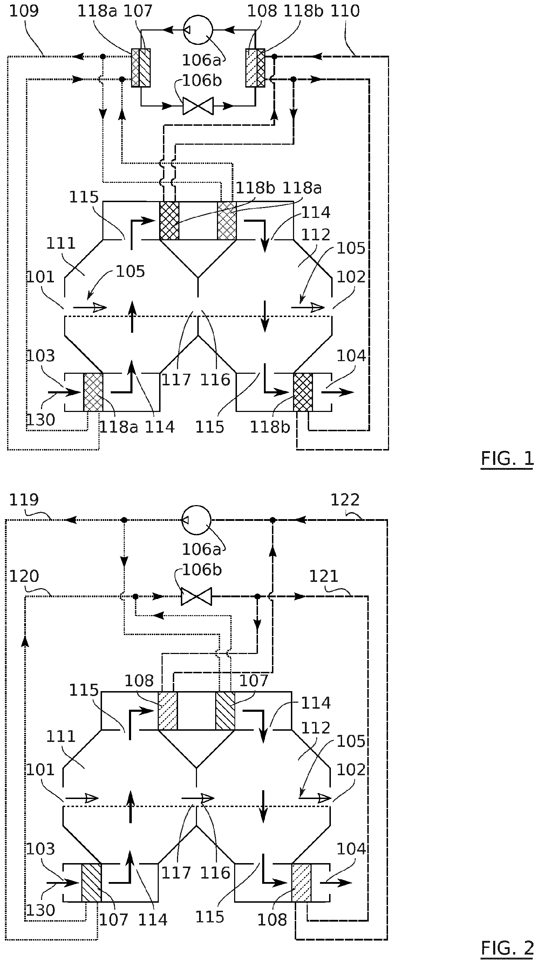

Selon l'invention, le dispositif comprend une pluralité de zones de séchage 111, 112, 113. Le dispositif comprend au moins deux zones 111, 112 comme illustré à la figure 1. Avantageusement, le nombre de zones de séchage est compris entre 2 et 10, plus préférentiellement entre 2 et 5. Le nombre de zones sera défini pour obtenir un optimum économique fonction de l'investissement initial et du coût de consommation gagné par an c'est-à-dire du temps de retour sur investissement.

Ces zones de séchage sont agencées en série entre l'entrée 101 et la sortie 103 du produit 105. Les zones de séchage sont adjacentes deux à deux. L'agencement des zones se fait relativement au déplacement du produit dans l'enceinte. Les zones 111, 112, 113 sont formées les unes à la suite des autres dans l'enceinte le long du déplacement du produit 105. Les zones 111,112, 113 sont préférentiellement contiguës, c'est-à-dire que les zones sont en contact les unes à la suite des autres, le produit 105 est constamment exposé au gaz de séchage, sans interruption entre les zones 111, 112, 113.

Le dispositif comprend une première zone 111, une deuxième zone 112 et éventuellement une troisième zone 113 qui s'étendent successivement depuis l'entrée 101 jusqu'à la sortie 102 du produit 105.

Avantageusement, le produit 105 traverse les zones 111, 112, 113 les unes après les autres de l'entrée 101 à la sortie 102. Le produit 105 pénètre, sous forme à sécher, dans l'enceinte par l'entrée 101 puis travers une première zone 111, puis une deuxième zone 112, éventuellement une troisième zone 113 et les zones suivantes si présentes, puis ressort, sous forme séchée, de l'enceinte par la sortie 102.

Chaque zone comprend un passage d'entrée 116 et un passage de sortie 117 du produit 105. Avantageusement, les zones sont configurées pour limiter le passage d'air entre les zones au niveau des passages 116 et 117 du produit. Avantageusement, les passages 116 et 117 sont configurés pour laisser passer uniquement le produit 105 et éventuellement l'organe de déplacement du produit.

Chaque zone comprend une ouverture 114 pour l'entrée de gaz de séchage et une ouverture 115 pour la sortie de gaz de séchage.

Une zone de séchage est une chambre. La zone comprend des parois comprenant des ouvertures préférentiellement uniquement pour l'entrée 114 et la sortie 115 du gaz de séchage et pour l'entrée 116 et la sortie 117 du produit 105.

Avantageusement, l'entrée 114 et la sortie 115 du gaz de séchage sont distinctes du passage d'entrée 116 et du passage de sortie 117 du produit 105, plus précisément, c'est-à-dire que chaque zone comprend quatre ouvertures.

Chaque zone 111, 112, 113 est configurée pour être le siège d'un cycle de séchage du produit 105.

Le dispositif de séchage selon l'invention permet un séchage en plusieurs cycles. C'est-à-dire que le gaz de séchage effectue plusieurs rotations dans l'enceinte. Le gaz de séchage subit une recirculation dans au moins une autre zone de sorte à augmenter la saturation en eau dudit gaz avant son extraction. Avantageusement, le gaz de séchage est asséché entre chaque zone permettant une plus forte saturation du gaz dans la zone suivante.

Un cycle de séchage s'entend par l'entrée du gaz de séchage dans une zone par l'ouverture 114 d'entrée, l'échange d'énergie thermique avec le produit 105 et la sortie du gaz de séchage de la zone par une ouverture 115 de sortie. Ainsi dans chaque zone, le gaz effectue un nouveau cycle de séchage.

La température de séchage c'est-à-dire la température du gaz de séchage dans l'enceinte, plus précisément la température du gaz de séchage entrant dans chaque zone 111, 112, 113 est avantageusement comprise entre 40°C et 60°C.

Le dispositif selon l'invention comprend de manière caractéristique au moins une pompe à chaleur. La pompe à chaleur comprend des échangeurs tels qu'au moins un évaporateur 108 et au moins un condenseur 107. La pompe à chaleur comprend au moins un compresseur 106a et un détendeur 106b. Dans le condenseur 107, aussi dénommé source chaude, le fluide frigorigène libère sa chaleur au fluide secondaire (en l'espèce ici l'air 130) en passant de l'état gazeux à l'état liquide. Dans le réducteur de pression aussi appelé détendeur 106b, la pression du fluide frigorigène en phase liquide est réduite. Dans l'évaporateur, aussi dénommé source froide, la chaleur est prélevée au fluide secondaire pour vaporiser le fluide frigorigène. Le compresseur 107, actionné par un moteur électrique, élève la pression et la température du fluide frigorigène gazeux en le comprimant.

Les échangeurs, évaporateur 108 et condenseur 107, sont placés sur le circuit de circulation de gaz de sorte à récupérer de l'énergie du gaz de séchage sortant d'une zone 111 et à transférer de l'énergie au gaz de séchage entrant dans la zone 112 adjacente.

Plus préférentiellement, un évaporateur 108 est agencé sur le circuit de circulation de gaz au niveau d'une sortie 115 du gaz de séchage d'une zone 111, 112, 113. De cette manière, l'évaporateur 108 récupère au moins une partie de l'énergie thermique encore contenue dans le gaz de séchage sortant d'une zone 111, 112, 113.

Préférentiellement, un condenseur 107 est agencé sur le circuit de circulation de gaz au niveau d'une entrée 114 du gaz de séchage. De cette manière, le condenseur 107 transfert de l'énergie thermique au gaz de séchage entrant dans une zone 111, 112, 113.

Le compresseur 106a et le détendeur 106b sont agencés à l'extérieur ou à l'intérieur de l'enceinte et permettent par un circuit thermodynamique d'augmenter l'énergie thermique récupérée pour transférer plus d'énergie thermique au gaz de séchage entrant dans une zone que l'énergie thermique récupérée du gaz de séchage sortant d'une zone 111, 112, 113.

Le compresseur 106a et le détendeur 106b sont reliés au condenseur 107 et à l'évaporateur 108 par le circuit thermodynamique c'est-à-dire par un circuit de fluide frigorigène.

Le condenseur 107 comprend une entrée de fluide frigorigène et une sortie de fluide frigorigène, ladite sortie étant connectée à l'entrée de fluide frigorigène du détendeur 106b. La sortie de fluide frigorigène du détendeur 106b est reliée à l'entrée de fluide frigorigène de l'évaporateur 108. La sortie du fluide frigorigène de l'évaporateur 108 est reliée à l'entrée de fluide frigorigène du compresseur 106a. La sortie du fluide frigorigène du compresseur 106a est connectée à l'entrée de fluide frigorigène du condenseur 107. Les termes relié ou connecté s'entendent comme synonymes. Préférentiellement, les connexions sont directes c'est-à-dire sans organe intermédiaire, plus préférentiellement sans échangeur, encore plus préférentiellement sans autre élément de conduction fluidique type vanne ou pompe.

Plus précisément, le compresseur 106a est relié au condenseur 107 par une canalisation 119 d'amenée de fluide frigorigène chauffé de sorte à chauffer le gaz de séchage en entrée 114 de zone. Le condenseur 107 est relié au détendeur 106b par une canalisation 120 de sortie de fluide frigorigène refroidi.

De même, le détendeur 106b est relié à l'évaporateur 108 par une canalisation 121 d'amenée de fluide frigorigène refroidi de sorte à récupérer de l'énergie thermique du gaz de séchage au niveau de la sortie 115 de zone. L'évaporateur 108 est relié au compresseur 106a par une canalisation 122 de sortie de fluide frigorigène chauffé.

Le compresseur 106a élève la pression et la température du fluide frigorigène gazeux en le comprimant tandis que le détendeur 106b réduit la pression du fluide frigorigène en phase liquide.

Le condenseur 107 de la pompe à chaleur est configuré pour chauffer, directement ou indirectement, le gaz de séchage en entrée de chaque zone.

Suivant un premier mode de réalisation de l'invention illustré à la FIGURE 1, le dispositif comprend une pompe à chaleur telle que décrite ci-dessus. Le condenseur 107 de la pompe à chaleur est configuré pour chauffer indirectement le gaz de séchage en entrée de chaque zone. C'est-à-dire que le dispositif comprend un circuit de chauffage intermédiaire 109 comprenant un circuit de fluide frigorigène récupérant l'énergie thermique du condenseur 107 pour le transférer au gaz de séchage en entrée 114 de zone préférentiellement par au moins un premier échangeur intermédiaire 118a. Préférentiellement, le circuit de chauffage intermédiaire 109 comprend deux premiers échangeurs intermédiaires 118a, un échangeur 118a est disposé en regard du condenseur 107 au niveau de la pompe à chaleur et un autre échangeur 118b est disposé au niveau de l'ouverture 114 d'entrée de gaz d'une zone de sorte à chauffer le gaz en entrée de zone.

De même, l'évaporateur 108 de la pompe à chaleur est configuré pour récupérer indirectement de la chaleur du gaz de séchage en sortie 115 d'au moins une zone. C'est-à-dire que le dispositif comprend un circuit de récupération intermédiaire 110, comprenant un circuit de fluide frigorigène récupérant, préférentiellement par un deuxième échangeur intermédiaire 118b, l'énergie thermique au gaz de séchage en sortie 115 de zone pour le transférer à l'évaporateur 108. Préférentiellement, le circuit de récupération intermédiaire 110 comprend deux deuxièmes échangeurs intermédiaires 118b, un échangeur 118b est disposé en regard de l'évaporateur 108 au niveau de la pompe à chaleur et un autre échangeur 118b est disposé au niveau de l'ouverture 115 de sortie de gaz d'une zone de sorte à récupérer de la chaleur du gaz en sortie de zone.

Avantageusement, le dispositif comprend autant de circuits de chauffage intermédiaire que de zones et au moins n-1 circuits de récupération intermédiaire pour n zones.

Selon l'invention, chaque zone 111, 112, 113 est associée à un circuit de chauffage intermédiaire, c'est-à-dire plus précisément à un premier échangeur intermédiaire 118 et au moins une zone 111, 112, 113 est associée à un circuit de récupération intermédiaire, c'est-à-dire plus précisément à un deuxième échangeur intermédiaire 118. Dans ce cas-là, préférentiellement, la deuxième zone 112 et les zones suivantes éventuelles sont chacune respectivement associée à un circuit de chauffage intermédiaire et un circuit de récupération intermédiaire. La première zone 111 est associée à un circuit de chauffage intermédiaire et avantageusement pas à un circuit de récupération intermédiaire.

Suivant un dispositif qui ne fait pas partie de l'invention, illustré à la FIGURE 2, le dispositif comprend une pompe à chaleur telle que décrite ci-dessus. La pompe à chaleur comprend autant de condenseurs 107 que de zones et au moins n-1 évaporateurs 108 pour n zones. C'est-à-dire que les condenseurs 107 et les évaporateurs 108 de la pompe à chaleur sont déportés au niveau respectivement des entrées 114 et des sorties 115 du gaz de séchage des zones 111, 112, 113.

La pompe à chaleur comprend un compresseur 106a et un détendeur 106b. Ces éléments 106a, 106b étant reliés aux condenseurs 107 et évaporateurs 108 déportés.

Le dispositif comprend une première zone 111 et une deuxième zone 112 adjacente, positionnées suivant le sens de déplacement du produit 105 entre l'entrée 101 et la sortie 102 du produit 105.

Avantageusement, chaque zone 111, 112, 113 est associée à un condenseur 107 et au moins une zone 111, 112, 113 est associée à un évaporateur 108. Dans ce cas-là, préférentiellement, la deuxième zone 112 et les zones suivantes éventuelles sont chacune respectivement associée à un condenseur 107 et un évaporateur 108. La première zone 111 est associée à un condenseur 107 et avantageusement pas à un évaporateur 108.

Aux FIGURES 1 à 4, le dispositif comprend une seule pompe à chaleur, c'est-à-dire un seul compresseur 106a et un seul détenteur 106b.

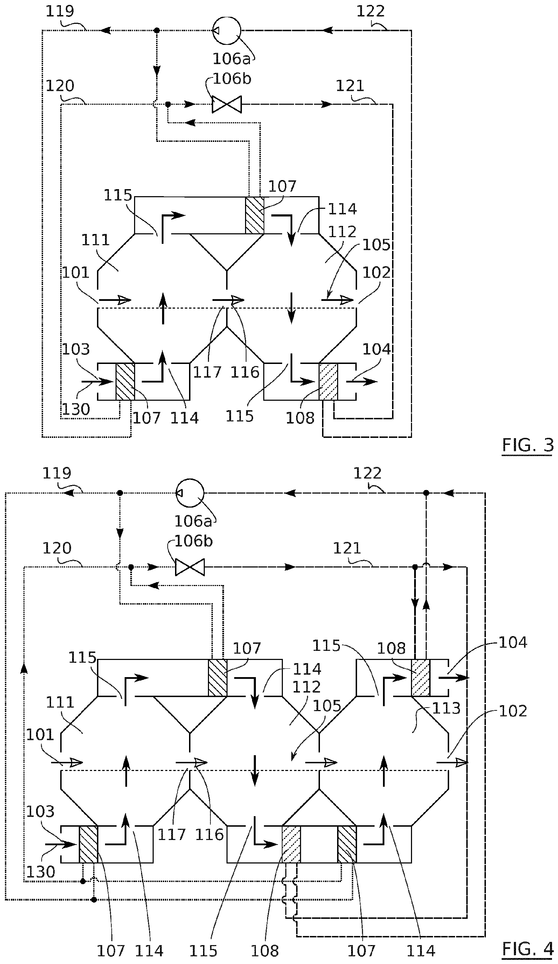

Suivant les dispositifs, qui ne font pas partie de l'invention, illustrés aux FIGURES 2 et 4, chaque entrée 114 de gaz d'une zone 111, 112, 113 est associée à un condenseur 107 et chaque sortie 115 de gaz d'une zone 111, 112, 113 est associée à un évaporateur 108. Suivant les différentes possibilités décrites ci-dessus, « associé » s'entend comme directement ou indirectement c'est-à-dire respectivement suivant le premier mode de réalisation illustré à la figure 1 dispositif, qui ne fait pas partie de l'invention, illustré à la figure 2.

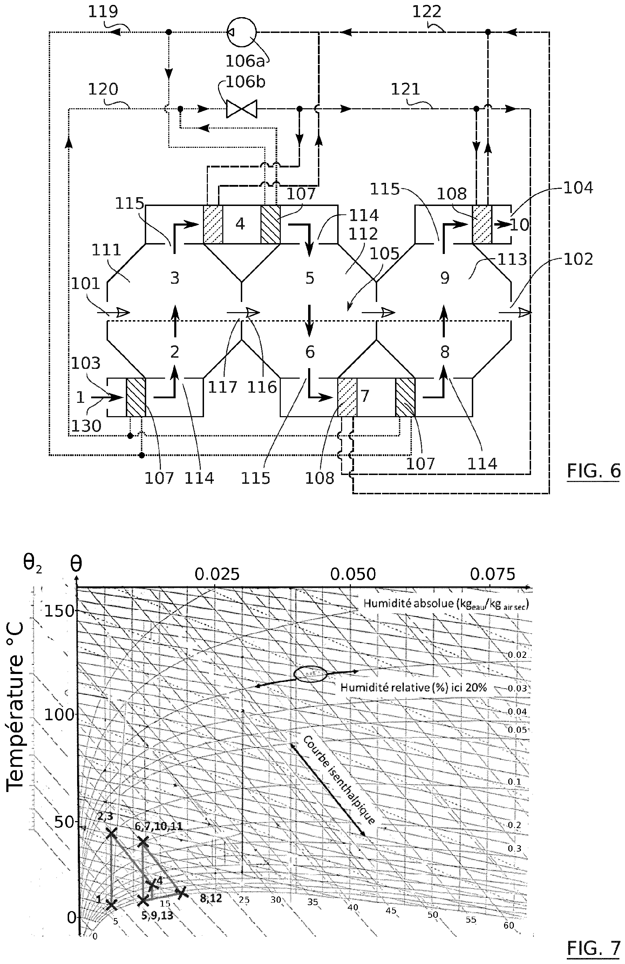

Suivant une variante d'un dispositif, qui ne fait pas partie de l'invention, illustré en FIGURE 3, pouvant toutefois s'appliquer au premier mode de réalisation illustré à la FIGURE 1 en supprimant un circuit de récupération intermédiaire, enlever l'évaporateur 108 d'une zone, préférentiellement de la première zone 111, permet de diminuer le coût d'investissement sans modifier de manière trop importante le fonctionnement du dispositif selon l'invention. En effet, le premier évaporateur 108 permet de faire passer le gaz de séchage du point 3 au point 4 sur le diagramme de la FIGURE 7, la suppression de l'évaporateur 108 supprime le point 4 sans modifier les caractéristiques du gaz de séchage aux points suivants. Lorsqu'on enlève l'évaporateur 108 dans la première zone 111, il faut généralement augmenter le débit d'air et donc augmenter la taille de l'installation. Mais un gain en consommation énergétique et en gain en énergie primaire est toutefois réalisé tel que décrit ci-après.

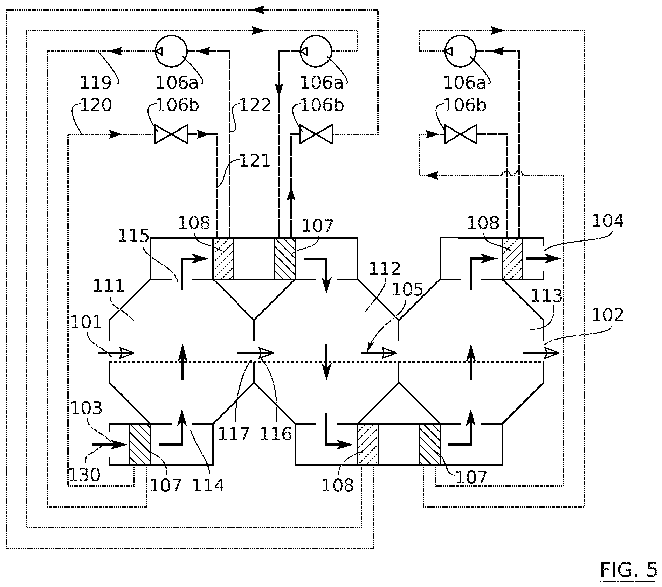

Suivant un dispositif qui ne fait pas partie de l'invention, le dispositif comprend une pompe à chaleur, c'est-à-dire un compresseur 106a et un détendeur 106b, pour chaque zone 111, 112, 113. Chaque zone ayant alors un compresseur 106a et un détendeur 106b reliés à un condenseur 107 et un évaporateur 108 tel qu'illustré en FIGURE 5. Cela permet d'ajuster au mieux la puissance de chaque pompe à chaleur au juste besoin de séchage de la zone de séchage et ainsi au global de gagner en coût de consommation énergétique. Par contre, cela multiplie le nombre de pompes à chaleur et donc augmente le coût d'investissement.

Une description d'un dispositif suivant la figure 4 est donnée ci-après.

L'entrée 103 de gaz séchage dans l'enceinte est en communication fluidique, de préférence directe, avec l'entrée du gaz de séchage dans un condenseur 107. La sortie du gaz de séchage du condenseur 107 est en communication fluidique, de préférence directe, avec l'ouverture d'entrée 114 du gaz de séchage de la première zone 111. L'ouverture de sortie 115 du gaz de séchage de la première zone 111 est en communication fluidique, de préférence directe, avec l'entrée du gaz de séchage dans l'évaporateur 108.

La sortie du gaz de séchage de l'évaporateur 108 est en communication fluidique, de préférence directe, avec l'entrée du gaz de séchage dans un condenseur 107 de la deuxième zone 112. La sortie du gaz de séchage du condenseur 107 est en communication fluidique, de préférence directe, avec l'ouverture d'entrée 114 du gaz de séchage de la deuxième zone 112. L'ouverture de sortie 115 du gaz de séchage de la deuxième zone 112 est en communication fluidique, de préférence directe, avec l'entrée du gaz de séchage dans l'évaporateur 108.

La sortie du gaz de séchage de l'évaporateur 108 est en communication fluidique, de préférence directe, avec l'entrée du gaz de séchage dans un condenseur 107 de la troisième zone 113. La sortie du gaz de séchage du condenseur 107 est en communication fluidique, de préférence directe, avec l'ouverture d'entrée 114 du gaz de séchage de la troisième zone 113. L'ouverture de sortie 115 du gaz de séchage de la troisième zone 113 est en communication fluidique, de préférence directe, avec l'entrée du gaz de séchage dans l'évaporateur 108. La sortie du gaz de séchage de l'évaporateur 108 est en communication fluidique, de préférence directe, avec l'extraction principale 104 du gaz de séchage de l'enceinte.

Préférentiellement, une communication fluidique directe s'entend sans organe intermédiaire, plus préférentiellement sans échangeur, encore plus préférentiellement sans autre élément de conduction fluidique type vanne ou pompe.

Un cycle de séchage comprend un échange thermique, direct ou indirect, du gaz de séchage avec un condenseur 107 de sorte chauffer le gaz de séchage. Il comprend également un échange avec le produit 105, c'est-à-dire une mise en contact direct du gaz de séchage avec le produit 105. Avantageusement, un cycle comprend échange thermique, direct ou indirect, du gaz de séchage avec un évaporateur 108 de sorte récupérer de l'énergie thermique du gaz de séchage. On entend par direct que le gaz de séchage échange directement dans le condenseur 107 ou l'évaporateur 108 avec le fluide frigorigène et par indirect que le gaz de séchage échange avec le fluide frigorigène du condenseur 107 ou de l'évaporateur 108 par l'intermédiaire dans un échangeur 118 supplémentaire.

A titre d'exemple, le séchage d'un produit suivant le dispositif illustré à la FIGURE 6, identique à la figure 4, correspondant à une variante du deuxième mode de réalisation, est décrit ci-après.
Point 1 : 10°C et 70% Humidité Relative (HR);
Point 2 : 45°C et 10% HR
Point 3 : 25°C et 70%HR
Point 4 : 17°C et 100%HR
Point 5 : 45°C et 20%HR
Point 6 : 25°C et 70%HR
Point 7: 17°C et 100%HR
Point 8 : 45°C et 20%HR
Point 9 : 25°C et 70%HR
Point 10 : 17°C et 100%HR

Les différents points du circuit du gaz de séchage indiqués sur la FIGURE 6 sont reportés sur le diagramme de l'air humide de la FIGURE 7 avec :
- En axe des coordonnées horizontales : la température sèche notée θs ou simplement θ en [°C]. Cette caractéristique peut être mesurée à l'aide d'un simple thermomètre dit "à bulbe sec".
- En axe des coordonnées verticales : l'humidité absolue notée r en [kgeau / kggas]. La notation x ou w est aussi utilisée. L'humidité absolue est aussi appelée teneur en eau de l'air.
- L'enthalpie spécifique notée isenthalpie ou h en [kJ / kggas].
- Humidité relative en pourcentage par rapport à la courbe de saturation.

Suivant cet exemple, on considère que le gaz est de l'air présentant à l'entrée principale 101 (point 1) une température de 10°C et une humidité relative à 70%.

Un premier cycle de séchage débute. Un premier échangeur, un condenseur 107, associé à la première zone 111, permet de chauffer l'air de 10°C à 45°C et l'humidité relative passe alors de 70% à environ 10%. L'air pénètre dans la première zone 111 par ouverture d'entrée 114 (point 2). Ainsi, cet air permet de sécher le produit et l'air se refroidit en se chargeant d'humidité (point 3) jusqu'à une température de 25°C et une humidité de 70%. L'air sort de la première zone 111 par une ouverture de sortie 115. Puis l'air circule avantageusement au travers d'un évaporateur 8 de l'énergie est récupérée, l'eau présente dans l'air se condense. Au point 4 l'air est à environ 17°C et à 100% d'humidité. Le premier cycle de séchage est terminé et un deuxième cycle de séchage débute. Un autre échangeur, un condenseur 107, permet de chauffer l'air à 45° et l'humidité relative passe alors à 20%. Cet air est à nouveau utilisé pour le séchage en entrant dans la deuxième zone 112 par une ouverture d'entrée 114 (point 5). Le même circuit d'air que dans la première zone 111 est réalisé dans cette deuxième zone 112. On refait alors encore un cycle complet (points 5,6,7).

Ainsi, l'air entrant dans la deuxième zone 112 (point 5) permet de sécher le produit et l'air se refroidit en se chargeant d'humidité (point 6) jusqu'à une température de 25°C et une humidité de 100%. L'air sort de la deuxième zone 112 par une ouverture de sortie 115. Puis l'air circule avantageusement au travers d'un évaporateur 108, de l'énergie est récupérée, l'eau présente dans l'air se condense. Au point 7 l'air est à environ 17°C et à 100% d'humidité. Le deuxième cycle de séchage est terminé et un troisième cycle de séchage débute. Un autre échangeur, un condenseur 107, permet de chauffer l'air à 45° et l'humidité relative passe alors à 20%. Cet air est à nouveau utilisé pour le séchage en entrant dans la troisième zone 113 par une ouverture d'entrée 114 (point 8).

Le même circuit d'air que dans la première et deuxième zone 111, 113 est réalisé dans cette troisième zone 113. On refait alors encore un cycle complet (points 8,9,10).

Ainsi, l'air entrant dans la troisième zone 113 (point 8) permet de sécher le produit et l'air se refroidit en se chargeant d'humidité (point 9) jusqu'à une température de 25°C et une humidité de 100%. L'air sort de la troisième zone 113 par une ouverture de sortie 115. Puis l'air circule avantageusement au travers d'un évaporateur 108, de l'énergie est récupérée, l'eau présente dans l'air se condense. Au point 10 l'air est à environ 17°C et à 100% d'humidité. Le troisième cycle se termine. Cet air est alors extrait de l'enceinte par une extraction principale 104. Le produit sec est également extrait de l'enceinte par la sortie de produit séché 102.

Ainsi, à chaque zone on récupère de l'énergie pour alimenter la pompe à chaleur et le gaz est remis en circulation pour augmenter sa saturation en eau.

Des simulations avec le logiciel Engineering Equation Solver (EES) ont été réalisées sur un cas précis pour évaluer le gain en énergie primaire et sur les coûts de consommation (avec des hypothèses de coût du gaz et de l'électricité en France en 2015). On entend par énergie primaire, l'énergie directement facturée, car servant de premier média entre un réseau de distribution et un convertisseur d'énergie (gaz, électricité, fioul...).

Les caractéristiques des différentes configurations ainsi que les résultats en gain en énergie primaire et en coût de consommation sont présentés dans le tableau 1 ci-dessous.

**TABLEAU 1 : gain en énergie primaire et en coût de consommation pour différentes configurations de dispositif**

| N° de configuration | 1 | 2 | 3 | 4 | 5 | 6 | 7 | 8 | 9 | 10 | 11 |
|---|---|---|---|---|---|---|---|---|---|---|---|
| Nb de cycles | 1 | 1 | 1 | 2 | 2 | 3 | 3 | 4 | 4 | 5 | 5 |
| Temp de séchage (°C) | 120 | 100 | 80 | 55 | 75 | 45 | 58 | 45 | 40 | 40 | 45 |
| Débit d'air (Kg/h) | 13700 | 16750 | 21550 | 19500 | 13700 | 17500 | 13700 | 13700 | 16500 | 13700 | 11500 |
| Puissance PAC (kW_{chaud}) | 174 | 213 | 274 | 459 | 288 | 460 | 480 | 453 | 475 | 470 | 452 |
| Puissance appoint (kW) | 252 | 213 | 152 | 0 | 157 | 0 | 0 | 0 | 0 | 0 | 0 |
| COP | 4.5 | 4.1 | 3.7 | 3.4 | 4.2 | 4.2 | 3.5 | 4.3 | 4.7 | 4.8 | 4.5 |
| Gain en énergie primaire en % | 17.6 | 18.8 | 19.9 | 19.5 | 21.5 | 33.7 | 16.7 | 37.0 | 38.5 | 40.9 | 38.8 |
| Gain sur le cout énergétique en % | 26.4 | 30.6 | 36.6 | 49.9 | 37.4 | 58.7 | 48.1 | 60.7 | 61.8 | 63.3 | 62.0 |
| Récupération eau (Kg)/h) | 117 | 150 | 190 | 283 | 188 | 306 | 280 | 312 | 314 | 319 | 316 |
| Tem du condenseur (°C) | 55 | 55 | 55 | 55 | 55 | 45 | 58 | 45 | 40 | 40 | 45 |

| | | | | | | | | | | | |
|---|---|---|---|---|---|---|---|---|---|---|---|
| Le nombre de cycle du procédé de séchage correspond au nombre de zone de séchage du dispositif. Les gains en énergie primaire et en en coût selon différentes configurations sont reportés sur le graphe de la FIGURE 8. Les chiffres des points correspondent aux différentes configurations du tableau 1. | | | | | | | | | | | |

Dans ce cas de figure, dès deux zones (configuration 4) l'énergie d'appoint n'est plus nécessaire. Dans cette configuration, le débit d'air est supérieur cependant à la configuration 1 de base avec un chauffage à 120°C.

Avec trois cycles, on peut obtenir avoir une configuration avec le même débit (configuration 7), mais le gain en énergie primaire et en coût de consommation est nettement plus faible que dans la configuration 6.

Avec quatre cycles et cinq cycles (configuration 8 à 11), le gain se fait sur l'énergie primaire et sur le coût de consommation avec même dans la configuration 11 une baisse du débit d'air donc une diminution de la taille de l'installation.

L'optimum économique (nombre de cycles, température de chauffe, débit d'air) se fera en fonction de l'investissement initial et du coût de consommation gagné par an (Temps de retour sur investissement).

Un autre intérêt de l'invention pourrait être dans certains cas la récupération de l'eau. En effet, l'évaporateur 108 permet de condenser de l'humidité contenue dans le gaz de séchage sortant. L'humidité se condense sur la surface extérieure de l'échangeur de chaleur, et peut être ainsi récupérée sous forme liquide.

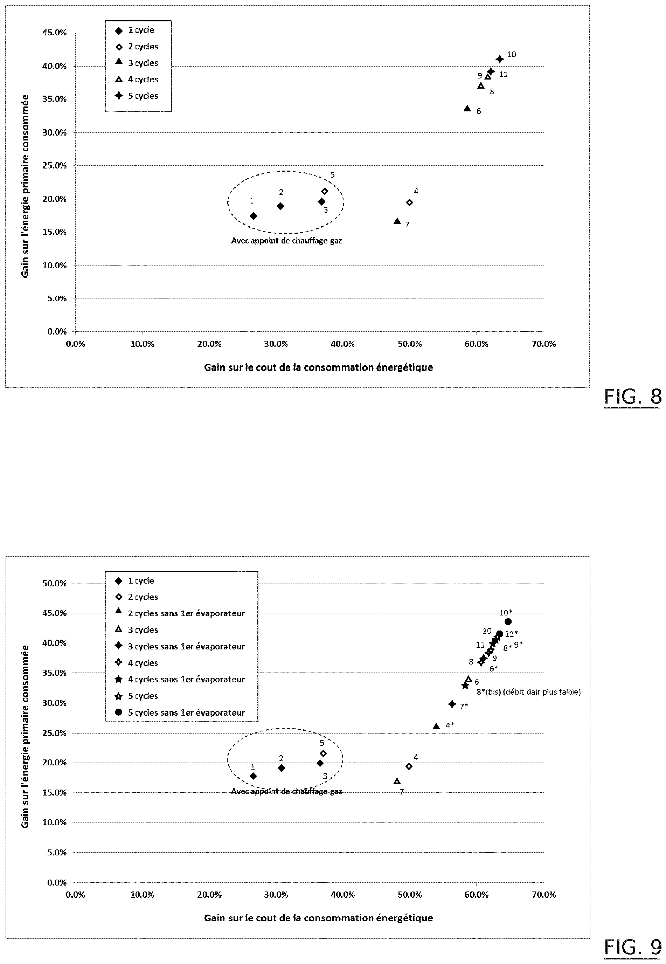

Les gains en énergie primaire et en coût selon différentes configurations avec ou sans un premier évaporateur 108 sont reportés sur le graphe de la FIGURE 9.

Par exemple, avec deux cycles, les deux caractéristiques des deux configurations avec et sans évaporateur sont présentées dans le TABLEAU 2 suivant :

**TABLEAU 2 : gain en énergie primaire et en coût de consommation pour différentes configurations de dispositif**

| N° de configuration | **1 (avec le premier évaporateur 108)** | **2 (sans le premier évaporateur 108)** |
|---|---|---|
| Nb de cycles | 2 | 2 |
| Temp de séchage (°C) | 55 | 55 |
| Débit d'air (Kg/h) | 19500 | 20500 |
| Puissance PAC (kW_{chaud}) | 459 | 411 |
| Puissance appoint (kW) | 0 | 0 |
| COP | 3.4 | 3.4 |
| Gain en énergie primaire en % | 19.5 | 26.4 |
| Gain sur le cout énergétique en % | 49.9 | 54.2 |
| Récupération eau (Kg)/h) | 283 | 293 |
| Tem du condenseur (°C) | 55 | 55 |

L'optimum économique se fera en fonction du gain gagné en enlevant l'évaporateur, le surcout de la taille de l'installation (augmentation du débit d'air), par rapport au gain sur le coût de consommation.

L'invention n'est pas limitée aux modes de réalisation précédemment décrits et s'étend à tous les modes de réalisation couverts par les revendications.

### REFERENCES

- 101.: Entrée du produit à sécher
- 102.: Sortie du produit séché
- 103.: Entrée principale gaz de séchage
- 104.: Extraction principale gaz de séchage
- 105.: Produit
- 106.: a. Compresseur
- 106.: b. Détendeur
- 107.: Condenseur
- 108.: Evaporateur
- 109.: Circuit de chauffage intermédiaire
- 110.: Circuit de récupération intermédiaire
- 111.: Première zone de séchage
- 112.: Deuxième zone de séchage
- 113.: Troisième zone de séchage
- 114.: Ouverture d'entrée de gaz de séchage d'une zone
- 115.: Ouverture de sortie de gaz de séchage d'une zone
- 116.: Passage d'entrée du produit dans une zone
- 117.: Passage de sortie du produit d'une zone
- 118.: a. Premier échangeur circuit de chauffage intermédiaire
b. Deuxième échangeur circuit de récupération intermédiaire
- 119.: Canalisation d'amenée du fluide frigorigène chauffé
- 120.: Canalisation de sortie du fluide frigorigène refroidi
- 121.: Canalisation d'amenée du fluide frigorigène refroidi
- 122.: Canalisation de sortie du fluide frigorigène chauffé
- 130.: Air

## Revendications

1. Dispositif pour le séchage d'un produit à sécher comprenant :
- une enceinte comprenant :
∘ une entrée (101) destinée à recevoir un produit (105) et une sortie (102) destinée à évacuer ledit produit (105), et un organe de déplacement du produit (105) entre l'entrée (101) et la sortie (102), et
∘ un circuit de circulation de gaz de séchage entre une entrée principale (103) et une extraction principale (104),
- au moins une pompe à chaleur comprenant au moins un condenseur (107) et au moins un évaporateur (108)
**caractérisé en ce que**
- le dispositif comprend un nombre de zones de séchage (111, 112) au moins égale à deux, les zones (111, 112) de séchage étant agencées en série entre l'entrée (101) et la sortie (102) du produit (105), de sorte que chaque zone (111, 112) de séchage soit configurée pour être le siège d'un cycle de séchage,
- chaque zone (111, 112) comprenant une ouverture d'entrée (114) et une ouverture de sortie (115) du gaz de séchage, l'ouverture de sortie (115) d'une zone (111, 112) étant connectée fluidiquement à l'ouverture d'entrée (114) de la zone (111, 112) qui lui est adjacente de sorte à laisser passer le gaz de séchage entre ces deux zones (111, 112),
- le nombre de condenseur (107) de la pompe à chaleur est inférieur au nombre de zone,
- le dispositif comprend un circuit de chauffage intermédiaire (109) configuré pour transférer la chaleur du condenseur (107) au gaz de séchage en entrée (114) de chaque zone (111, 112) et comprenant deux premiers échangeurs intermédiaires (118a), un échangeur (118a) étant disposé en regard du condenseur 107 au niveau de la pompe à chaleur et un autre échangeur (118a) étant disposé au niveau de l'ouverture (114) d'entrée de gaz d'une zone,
- le dispositif comprend un circuit de récupération intermédiaire (110) configuré pour transférer la chaleur du gaz de séchage en sortie (115) d'au moins une zone (111, 112) à l'évaporateur (108) et comprenant deux deuxièmes échangeurs intermédiaires (118b), un échangeur (118b) étant disposé en regard de l'évaporateur (108) au niveau de la pompe à chaleur et un autre échangeur (118b) étant disposé au niveau de l'ouverture (115) de sortie de gaz d'une zone.

2. Dispositif selon la revendication précédente dans lequel le nombre de zones (111, 112, 113) de séchage est compris entre 2 et 10, préférentiellement entre 2 et 5.

3. Dispositif selon l'une quelconque des revendications précédentes dans lequel le gaz de séchage est de l'air.

4. Dispositif selon l'une quelconque des revendications précédentes ne comprenant pas de dispositif de chauffage d'appoint du gaz de séchage.

5. Dispositif selon l'une quelconque des revendications précédentes dans lequel le circuit de circulation de gaz de séchage est configuré pour que le gaz de séchage circule dans chaque zone (111, 112) de séchage suivant une direction principale perpendiculaire à une direction principale de déplacement du produit (105).

6. Dispositif selon l'une quelconque des revendications précédentes dans lequel l'organe de déplacement du produit (105) est configuré pour que le produit (105) traverse l'enceinte longitudinalement suivant une direction principale horizontale.

7. Procédé de séchage d'un produit à sécher comprenant :
- une introduction d'un produit (105) dans une enceinte par une entrée (101),
- une circulation d'un gaz de séchage dans l'enceinte entre une entrée principale (103) de gaz de séchage et une extraction principale (104) de gaz de séchage
- une extraction d'un produit de l'enceinte par une extraction (102), **caractérisé en ce qu'**il comprend
- une circulation du gaz de séchage au travers de plusieurs zones (111, 112) de séchage agencées en série entre l'entrée (101) et la sortie (102) du produit (105), le gaz de séchage circulant dans chaque zone (111, 112) entre une ouverture d'entrée (114) et une ouverture de sortie (115), de sorte que chaque zone de séchage (111, 112) est configurée pour être le siège d'un cycle de séchage, le gaz de séchage circule d'une ouverture de sortie (115) d'une zone à l'ouverture d'entrée (114) d'une zone adjacente,
- une récupération d'énergie thermique du gaz de séchage en sortie (115) d'au moins une zone par au moins un évaporateur (108) d'une pompe à chaleur par un circuit de récupération intermédiaire (110) configuré pour transférer la chaleur du gaz de séchage en sortie (115) d'au moins une zone (111, 112) à l'évaporateur (108), le circuit de récupération intermédiaire (110) comprenant deux deuxièmes échangeurs intermédiaires (118b), un échangeur (118b) étant disposé en regard de l'évaporateur (108) au niveau de la pompe à chaleur et un autre échangeur (118b) étant disposé au niveau de l'ouverture (115) de sortie de gaz d'une zone,
- un chauffage du gaz de séchage en entrée (114) de chaque zone par au moins un condenseur (107) d'une pompe à chaleur par un circuit de chauffage intermédiaire (109) configuré pour transférer la chaleur du condenseur (107) au gaz de séchage en entrée (114) de chaque zone (111, 112) et comprenant deux premiers échangeurs intermédiaires (118a), un échangeur (118a) étant disposé en regard du condenseur 107 au niveau de la pompe à chaleur et un autre échangeur (118a) étant disposé au niveau de l'ouverture (114) d'entrée de gaz d'une zone, le nombre de condenseur de la pompe à chaleur étant inférieur au nombre de zone.

8. Procédé de séchage selon la revendication précédente dans lequel le nombre de cycles de séchage est compris entre 2 et 10, préférentiellement entre 2 et 5, le gaz de séchage est de l'air.

9. Procédé de séchage selon l'une quelconque des deux revendications précédentes dans lequel il n'y a pas d'étape de chauffage du gaz de séchage par un dispositif d'appoint.

10. Procédé de séchage selon l'une quelconque des trois revendications précédentes comprenant dans chaque zone une circulation croisé du produit et du gaz de séchage.

## Patentansprüche

1. Vorrichtung für das Trocknen eines zu trocknenden Produkts, die Folgendes umfasst:
- einen Einschluss, umfassend:
∘ einen Eingang (101), der dazu bestimmt ist, ein Produkt (105) aufzunehmen, und einen Ausgang (102), der dazu bestimmt ist, das Produkt (105) auszulassen, und ein Verschiebungsorgan des Produkts (105) zwischen dem Eingang (101) und dem Ausgang (102), und
∘ einen Trocknungsgas-Zirkulationskreislauf zwischen einem Haupteingang (103) und einer Hauptextraktion (104),
- mindestens eine Wärmepumpe, die mindestens einen Kondensator (107) und mindestens einen Verdampfer (108) umfasst, **dadurch gekennzeichnet, dass**
- die Vorrichtung eine Anzahl von Trocknungszonen (111, 112) mindestens gleich zwei umfasst, wobei die Trocknungszonen (111, 112) in Reihe zwischen dem Eingang (101) und dem Ausgang (102) des Produkts (105) derart eingerichtet sind, dass jede Trocknungszone (111, 112) dazu konfiguriert ist, der Ort eines Trocknungszyklus zu sein,
- wobei jede Zone (111, 112) eine Eingangsöffnung (114) und eine Ausgangsöffnung (115) des Trocknungsgases umfasst, wobei die Ausgangsöffnung (115) einer Zone (111, 112) fluidisch mit der Eingangsöffnung (114) der Zone (111, 112), die an sie angrenzt, verbunden ist, so dass das Trocknungsgas zwischen diesen zwei Zonen (111, 112) durchgelassen wird,
- die Anzahl von Kondensatoren (107) der Wärmepumpe kleiner als die Anzahl von Zonen ist,
- die Vorrichtung einen Heizzwischenkreislauf (109) umfasst, der dazu konfiguriert ist, die Wärme des Kondensators (107) an das Trocknungsgas am Eingang (114) jeder Zone (111, 112) zu transferieren, und zwei erste Zwischenwärmetauscher (118a) umfasst, wobei ein Wärmetauscher (118a) gegenüber dem Kondensator (107) auf der Ebene der Wärmepumpe angeordnet ist, und ein anderer Wärmetauscher (118a) auf der Ebene der Gaseingangsöffnung (114) einer Zone angeordnet ist,
- die Vorrichtung einen Rückgewinnungs-Zwischenkreislauf (110) umfasst, der dazu konfiguriert ist, die Wärme des Trocknungsgases am Ausgang (115) mindestens einer Zone (111, 112) an den Verdampfer (108) zu transferieren, und zwei zweite Zwischenwärmetauscher (118b) umfasst, wobei ein Wärmetauscher (118b) gegenüber dem Verdampfer (108) auf der Ebene der Wärmepumpe angeordnet ist, und ein anderer Wärmetauscher (118b) auf der Ebene der Gasausgangsöffnung (115) einer Zone angeordnet ist.

2. Vorrichtung nach dem vorstehenden Anspruch, wobei die Anzahl von Trocknungszonen (111, 112, 113) zwischen 2 und 10, bevorzugt zwischen 2 und 5 liegt.

3. Vorrichtung nach einem der vorstehenden Ansprüche, wobei das Trocknungsgas Luft ist.

4. Vorrichtung nach einem der vorstehenden Ansprüche, die keine Zusatzheizung des Trocknungsgases umfasst.

5. Vorrichtung nach einem der vorstehenden Ansprüche, wobei der Trocknungsgas-Zirkulationskreislauf dazu konfiguriert ist, dass das Trocknungsgas in jeder Trocknungszone (111, 112) gemäß einer Hauptrichtung senkrecht zu einer Hauptverschiebungsrichtung des Produkts (105) zirkuliert.

6. Vorrichtung nach einem der vorstehenden Ansprüche, wobei das Verschiebungsorgan des Produkts (105) dazu konfiguriert ist, dass das Produkt (105) den Einschluss längs gemäß einer horizontalen Hauptrichtung durchquert.

7. Trocknungsverfahren eines zu trocknenden Produkts, umfassend:
- eine Einführung eines Produkts (105) in einen Einschluss durch einen Eingang (101),
- eine Trocknungsgaszirkulation in dem Einschluss zwischen einem Trocknungsgas-Haupteingang (103) und einer Trocknungsgas-Hauptextraktion (104),
- eine Extraktion eines Produkts aus dem Einschluss durch Extraktion (102),
**dadurch gekennzeichnet, dass** es Folgendes umfasst
- eine Zirkulation des Trocknungsgases durch mehrere Trocknungszonen (111, 112) hindurch, die in Reihe zwischen dem Eingang (101) und dem Ausgang (102) des Produkts (105) eingerichtet sind, wobei das Trocknungsgas in jeder Zone (111, 112) zwischen einer Eingangsöffnung (114) und einer Ausgangsöffnung (115) derart zirkuliert, dass jede Trocknungszone (111, 112) dazu konfiguriert ist, der Ort eines Trocknungszyklus zu sein, das Trocknungsgas von einer Ausgangsöffnung (115) einer Zone zu der Eingangsöffnung (114) einer angrenzenden Zone zirkuliert,
- eine Wärmeenergierückgewinnung des Trocknungsgases am Ausgang (115) mindestens einer Zone durch mindestens einen Verdampfer (108) einer Wärmepumpe durch einen Rückgewinnungs-Zwischenkreislauf (110), der dazu konfiguriert ist, die Wärme des Trocknungsgases am Ausgang (115) mindestens einer Zone (111, 112) an den Verdampfer (108) zu transferieren, wobei der Rückgewinnungs-Zwischenkreislauf (110) zwei zweite Zwischenwärmetauscher (118b) umfasst, wobei ein Wärmetauscher (118b) gegenüber dem Verdampfer (108) auf der Ebene der Wärmepumpe angeordnet ist, und ein anderer Wärmetauscher (118b) auf der Ebene der Gasausgangsöffnung (115) einer Zone angeordnet ist,
- eine Heizung des Trocknungsgases am Eingang (114) jeder Zone durch mindestens einen Kondensator (107) einer Wärmepumpe durch einen Heizzwischenkreislauf (109), der dazu konfiguriert ist, die Wärme des Kondensators (107) an das Trocknungsgas am Eingang (114) jeder Zone (111, 112) zu transferieren, und mindestens zwei erste Zwischenwärmetauscher (118a) umfasst, wobei ein Wärmetauscher (118a) gegenüber dem Kondensator (107) auf der Ebene der Wärmepumpe angeordnet ist, und ein anderer Wärmetauscher (118a) auf der Ebene der Gaseingangsöffnung (114) einer Zone angeordnet ist, wobei die Anzahl von Kondensatoren der Wärmepumpe kleiner ist als die Anzahl von Zonen.

8. Trocknungsverfahren nach dem vorstehenden Anspruch, wobei die Anzahl von Trocknungszyklen zwischen 2 und 10, bevorzugt zwischen 2 und 5 liegt, wobei das Trocknungsgas Luft ist.

9. Trocknungsverfahren nach einem der zwei vorstehenden Ansprüche, wobei kein Heizschritt des Trocknungsgases durch eine Zusatzvorrichtung vorhanden ist.

10. Trocknungsverfahren nach einem der drei vorstehenden Ansprüche, das in jeder Zone eine Kreuzzirkulation des Produkts und des Trocknungsgases umfasst.

## Claims

1. Device for the drying of a product to be dried comprising:
- a chamber comprising:
∘ an inlet (101) intended to receive a product (105) and an outlet (102) intended to discharge said product (105), and a member for moving the product (105) between the inlet (101) and the outlet (102), and
∘ a circuit for circulating drying gas between a main inlet (103) and a main extraction (104),
- at least one heat pump comprising at least one condenser (107) and at least one evaporator (108),
**characterised in that**
- the device comprises a number of drying zones (111, 112) at least equal to two, the drying zones (111, 112) being arranged in series between the inlet (101) and the outlet (102) of the product (105), such that each drying zone (111, 112) is configured to be the base of a drying cycle,
- each zone (111, 112) comprising an inlet opening (114) and an outlet opening (115) for the drying gas, the outlet opening (115) of a zone (111, 112) being fluidically connected to the inlet opening (114) of the zone (111, 112) which itself is adjacent so as to let the drying gas pass between these two zones (111, 112),
- the number of condensers (107) of the heat pump is less than the number of zones,
- the device comprises an intermediate heating circuit (109), configured to transfer the heat from the condenser (107) to the drying gas at the inlet (114) of each zone (111, 112) and comprising two first intermediate exchangers (118a), an exchanger (118a) being disposed facing the condenser (107) at the heat pump and another exchanger (118a) being disposed at the gas inlet opening (114) of a zone,
- the device comprises an intermediate recovery circuit (110) configured to transfer the heat from the drying gas at the outlet (115) of at least one zone (111, 112) to the evaporator (108) and comprising two second intermediate exchangers (118b), an exchanger (118b) being disposed facing the evaporator (108) at the heat pump and another exchanger (118b) being disposed at the gas outlet opening (115) of a zone.

2. Device according to the preceding claim, wherein the number of drying zones (111, 112, 113) is between 2 and 10, preferably between 2 and 5.

3. Device according to any one of the preceding claims, wherein the drying gas is air.

4. Device according to any one of the preceding claims, not comprising any device for complementarily heating the drying gas.

5. Device according to any one of the preceding claims, wherein the circuit for circulating drying gas is configured, such that the drying gas circulates in each drying zone (111, 112) in a main direction perpendicular to a main movement direction of the product (105).

6. Device according to any one of the preceding claims, wherein the member for moving the product (105) is configured, such that the product (105) passes through the chamber longitudinally in a main horizontal direction.

7. Method for drying a product to be dried, comprising:
- an introduction of a product (105) into a chamber through an inlet (101),
- a circulation of a drying gas in the chamber between a drying gas main inlet (103) and a drying gas main extraction (104),
- an extraction of a product from the chamber through an extraction (102),
**characterised in that** it comprises
- a circulation of the drying gas through several drying zones (111, 112) arranged in series between the inlet (101) and the outlet (102) of the product (105), the drying gas circulating in each zone (111, 112) between an inlet opening (114) and an outlet opening (115), such that each drying zone (111, 112) is configured to be the base of a drying cycle, the drying gas circulates from an outlet opening (115) of a zone to the inlet opening (114) of an adjacent zone,
- a thermal energy recovery of the drying gas at the outlet (115) of at least one zone through at least one evaporator (108) of a heat pump through an intermediate recovery circuit (110) configured to transfer the heat from the drying gas at the outlet (115) of at least one zone (111, 112) to the evaporator (108), the intermediate recovery circuit (110) comprising two second intermediate exchangers (118b), an exchanger (118b) being disposed facing the evaporator (108) at the heat pump and another exchanger (118b) being disposed at the gas outlet opening (115) of a zone,
- a heating of the drying gas at the inlet (114) of each zone by at least one condenser (107) of a heat pump by an intermediate heating circuit (109), configured to transfer the heat from the condenser (107) to the drying gas at the inlet (114) of each zone (111, 112) and comprising two first intermediate exchangers (118a), an exchanger (118a) being disposed facing the condenser (107) at the heat pump and another exchanger (118a) being disposed at the gas inlet opening (114) of a zone, the number of condensers of the heat pump being less than the number of zones.

8. Drying method according to the preceding claim, wherein the number of drying cycles is between 2 and 10, preferably between 2 and 5, the drying gas is air.

9. Drying method according to any one of the two preceding claims, wherein there is no step of drying the drying gas by a complementary device.

10. Drying device according to any one of the three preceding claims, comprising, in each zone, a crossed circulation of the product and of the drying gas.
